# EUROPEAN PATENT SPECIFICATION

(11) **EP 3 037 142 B1**
(45) Date of publication and mention of the grant of the patent: **05.04.2017**
(21) Application number: 14199950.8
(22) Date of filing: 23.12.2014
(51) Int. Cl.: A63C 9/088, A63C 11/22

(54) **A system for harvesting electrical energy during ski touring**
System zur Gewinnung von elektrischer Energie während des Skiwanderns
Système destiné à recueillir de l'énergie électrique au cours de ski de randonnée

(43) Date of publication of application: 29.06.2016
(73) Proprietor: Technische Universität München, 80333 München (DE)
(72) Inventor: Senner, Veit, 86559 Adelzhausen (DE); Schott, Wolfgang, 80809 München (DE)
(74) Representative: Lucke, Andreas

(56) References cited:
- WO-A1-80/02648
- WO-A1-2013/042154
- WO-A2-2009/092596

## Description

### FIELD OF THE INVENTION

The present invention is in the field of ski touring equipment. More particularly, the present invention relates to a system for harvesting electrical energy during ski touring.

### BACKGROUND AND RELATED PRIOR ART

Ski touring or ski mountaineering is an increasingly popular branch of Alpine skiing, where the ski tourist climbs mountains under his or her own power using Nordic skiing techniques. In Nordic skiing the heel of a ski boot is free to be lifted off the ski and the climbing or walking is assisted by arm power using ski poles. Only for downhill skiing, the heel of the ski boot is fixed to the ski, such that conventional Alpine downhill skiing techniques can be applied. Alternatively, the so-called telemark-style can be used for downhill skiing in ski touring where the heel is free to be raised from the ski as well.

Ski touring is found very attractive by an increasing number of skiers, as it combines downhill skiing with athletic exercise, avoids crowded ski resorts, promises freeride skiing experience away from prepared slopes and allows mountaineering in the winter and spring months in deep, uncompacted snow where mountaineering without skis would be impossible or a least very cumbersome. However, unfortunately ski touring also involves a number of risks and dangers that need to be considered.

One of these risks is due to avalanches, which mainly occur in the ski touring season. When caught in an avalanche, the chances of not being buried are increased if the skier uses a so-called avalanche airbag system which can be rapidly inflated in case of emergency and helps keeping the skier afloat in the avalanche. When caught in an avalanche, it is further necessary that the skier releases the skis from his/her feet and lets go the ski poles. However, timely releasing the ski binding in case of emergency, particularly under stress, often turns out to be difficult or impossible. Even letting go the ski poles can be difficult as the skier typically has his or her hand caught in a loop attached to the ski pole handle. In order to quickly and reliably release the skis or the ski pole handles, in WO 2009/092596 an emergency release system is disclosed in which the release is actuated using a pyrotechnic device. If the pyrotechnic device is to be ignited electrically, the entire safety of the security release system is dependent on the reliability of the corresponding electrical power supply.

A further danger involved in ski touring is getting lost under impaired visibility conditions, for example due to fog, heavy snowing or the reduced daylight period in the ski touring season. For this reason, skiers usually rely on GPS-systems when visibility becomes poor, which, however, are also dependent on a secure power supply.

Yet further dangers involved with ski touring are injuries occurring during downhill skiing. In case of a severe injury, the skier often will not be able to reach a safe place on his own, such that a mountain rescue needs to be called. Mountain rescue also needs to be alarmed in avalanche accidents. While nowadays there is often a fairly reliable cell phone coverage in many mountain regions that are popular for ski touring, again a reliable power source for mobile phones is crucial. Since many ski tours last for several days without possibility for recharging a cell phone, there is a significant likelihood that the mobile phone is out of power when an emergency call needs to be made. This is particularly true in cases of extreme cold, or when a mobile phone was inadvertently not turned off after a previous use or was inadvertently turned on while stored in a backpack or a jacket's pocket.

Accordingly, there are many instances where a skier has to rely on electrical power supply in various cases of emergency.

DE 29 23 173 discloses an ordinary downhill ski binding having an electronically controlled safety release and a rechargeable battery. For recharging the battery, mechanical energy involved with minute vibrational motion between a ski and a base plate of a binding are converted to electrical energy using a coil and a magnet or a piezo-electric element.

US 7,080,849 discloses a ski having an electrical transducer laminated to the ski board which converts mechanical power generated upon bending the ski to electrical power. Further, an electrical circuit is connected across the transducer and may supply power to the transducer, which electrical power is derived from the power extracted from the mechanical deformation. The transducer converts the electrical power to mechanical power to actively stiffen the ski. WO 2013/042154 A1 discloses a ski- or trekking pole which is composed of a shaft interposed between a handle and a ring, placed at the two opposite ends of the shaft. The pole comprises of a harvester device for generating electric current, which is composed of a moving magnetic element, sliding along a sliding guide; a fixed magnetic element arranged in the vertically lower end of the sliding guide, the fixed magnetic element and the moving magnetic element, sliding along the sliding guide, being mutually oriented in such a way as to oppose the two faces with the same polarity in order to generate a magnetic repulsion force; and a first winding made of electrically conductive material adapted to concatenate a magnetic field of the moving magnetic element, sliding along the sliding guide.

An emergency release system for winter sports equipment is disclosed in WO 2009/09296 A2.

Document WO80/02648 discloses a system according to the preamble of claim 1.

### SUMMARY OF THE INVENTION

The object underlying the invention is to provide a system that allows for a more reliable power source for ski touring purposes, in particular for security related applications such as emergency release, GPS-navigation or making emergency calls.

This problem is solved by a system for harvesting electrical energy during ski touring according to claim 1 and an emergency release system according to claim 14. Preferable embodiments are described in the dependent claims.

The systems of the invention comprises an electrical generator arrangement for converting mechanical energy to electrical energy. Herein, the mechanical energy may be associated with the pivoting movement of a ski boot relative to a ski when using Nordic skiing techniques, or with the use of ski poles in Nordic skiing techniques. Further, the system comprises a storage device for electrical energy and a consumer of electrical energy or an interface for establishing an electrical connection to such consumer.

In the system of the present invention, electrical energy is hence gained from mechanical energy that is associated with active movements of the skier, namely either with the pivoting movement of the ski boot relative to the ski or with the movements involved with using the ski poles in Nordic skiing techniques in the way defined in claim 14. This differs significantly from the method of energy harvesting described in DE 29 23 173 or US 7,080,849, where the mechanical energy is associated with purely passive movements, namely with vibrations and deformations of the ski upon downhill skiing. The present inventors have observed that a more efficient and reliable system can be established if the electrical energy harvesting is based on the aforementioned active movement carried out during ski touring using the Nordic skiing technique or, in other words, during walking/climbing, rather than during downhill skiing. The reason is that although ski touring also involves downhill skiing, much more time is typically needed for walking up a mountain than for skiing down, so that the available charging time is longer than a
charging time that would be restricted to passive movement during downhill skiing. Further, a ski tour typically begins with walking up the mountain, so that the charging of an electrical energy storage device can start right from the beginning of the tour, while the downhill skiing is usually the end of the ski tour, when the charging could be too late.

Finally, as will become apparent from the specific embodiments shown below, harvesting the electrical energy from the active pivoting movement of the ski boot or from the use of the ski pole is very efficient and reliable, particularly since the associated movements are predictable and since a tremendous amount of mechanical energy is involved therein. In fact, in relation to the electrical power that is typically needed, the mechanical power reservoir associated with this type of motion is practically infinite.

In a preferred embodiment, the electrical generator arrangement comprises a linear generator that is actuated when a ski boot is moved relative to a ski. Such a linear generator allows for a very robust and reliable construction and has little wear, thereby adding to the reliability of the system.

In a preferred embodiment, the system is associated with an Alpine touring binding having a frame on which a ski boot is to be fixed and that is pivotably connectable to a fixed part to be attached to a ski, and the linear generator is actuated when the frame is pivoted with respect to said fixed part. In particular, the linear generator may be arranged within or mounted to said frame. This provides a very convenient way of arranging and actuating the linear generator. Moreover, upon actuating the linear generator, the current induced in the linear generator generates a Lorenz force which counteracts the pivoting movement of the frame, and hence generates a restoring force which helps to control the ski when the ski is lifted off the snow. In this regard, the linear generator may have a function that is similar to that of a spring provided in prior art Alpine touring bindings for biasing the frame towards the ski.

In an alternative embodiment, the system is associated with an Alpine touring binding comprising a swivel joint connecting
- a part of the binding for fixing the ski boot or a portion of the ski boot itself, and
- a part of the binding that is to be fixed to the ski

in a rotatable manner, wherein said electrical generator is a rotary generator having moving parts associated with the moving parts of said swivel joint. Rotary generators are known from prior art, a prominent example being a bicycle dynamo.

In a preferred embodiment, the generator is associated with a rectifier, facilitating the charging of the electrical energy storage device.

Herein, the rectifier may be a half-wave rectifier or a full-wave rectifier.

In a preferred embodiment, the rectifier is arranged such that a storage device for electrical energy is charged when the heel of a ski boot is raised from the ski. In this embodiment, a charging current is hence only induced in the upward movement of the heel of the boot. The additional force associated with lifting the heel of the ski boot necessary for generating the electrical power counteracts the upward movement of the heel and hence provides for an improved control over the ski when lifted off the snow as described above. In the opposite direction, i.e. when the heel of the ski boot is lowered, any current flow may either be blocked by the rectifier such as by a half-wave rectifier, such that no counteracting forces apply. In the alternative, the voltage induced may be changed in polarity using a full-wave rectifier, e.g. a bridge rectifier, thereby neutralizing the change in the sign of the voltage induced when reversing the mechanical movement. This way, a charging current of the same polarity is generated both during upward and downward movement of the ski boot heel..

In a preferred embodiment, the electrical consumer is a receiver or a transmitter of an emergency release system, in which upon receipt of an emergency (radio) signal by said receiver
- a ski boot is released from a binding, or
- a binding is released from a ski, or
- a handle is removed from a shaft of a ski pole.

For such an emergency release system, a reliable source of electrical power is of utmost importance. In particular, while it would be possible to use ordinary batteries in such an emergency release system, particularly batteries provided in an Alpine touring binding can be exposed to extremely low temperatures compromising their performance. These problems can be reliably and efficiently avoided with the system of the present invention.

In a preferred embodiment, the electrical consumer is an ignition apparatus for igniting a pyrotechnic device for releasing a ski boot from a binding, a binding from a ski, or a handle from a ski pole shaft.

In a preferred embodiment, the aforementioned interface for establishing a connection with a consumer is an electrical connector, in particular a USB-port. Using such interface, various electrical devices can be connected with the system such as to be powered with energy stored in the storage device for electrical energy, in particular a GPS-device or a mobile phone, which becomes especially important in cases of emergency where the generic power of such devices should happen to be low. Although the interface in most cases only serves to establish an electrical contact, but not for data transfer, a USB-port still is a favorable interface, since many electrical devices can be powered by USB.

In a preferred embodiment, the storage device is a rechargeable battery. In alternative embodiments, the storage device may be formed by an electrochemical capacitor, in particular a super capacitor.

In some applications, the electrical consumer may be a heating device used for warming a rechargeable battery, such that the performance of the rechargeable battery may be maintained in spite of low ambient temperatures.

In a preferred embodiment, the electrical generator arrangement comprises a coil and a magnet, wherein
- one of said coil and magnet is arranged or to be disposed at a ski or a part of a binding that is to be fixedly attached to a ski, and
- the other of said coil and magnet is arranged or to be disposed at a ski boot or a portion of a binding that is movable with respect to a ski.

In particular, using embodiments where one of the coil or magnet is arranged at the ski boot and the other is disposed on the ski, a generator can be formed even for Alpine touring bindings which do not have any pivoting frame to which the ski boot is attached, but where the ski boot itself is directly hingedly connected with a ski using pins inserted sideways into the tip of the ski boot, as is the case for bindings available under the brand name DYNAFIT.

The present invention further relates to an emergency release system which employs a system for harvesting electrical energy during ski touring according to one of the previously described embodiments.

In a preferred embodiment, the energy release system comprises a receiver for receiving an emergency radio signal, a control unit for controlling an apparatus for igniting a pyrotechnic device upon receipt of such emergency radio signal, and a system for harvesting electrical energy according to one of the previously described embodiments, wherein the receiver, the control unit and the apparatus for igniting said pyrotechnic device are powered with electrical power stored in the storage device for electrical energy.

### SHORT DESCRIPTION OF THE FIGURES

- Fig. 1: is a schematic drawing of components of an emergency release system including two systems for harvesting electrical energy according to different embodiments of the present invention,
- Fig. 2: is a schematic side view of a ski with an Alpine touring binding employing a system for harvesting electrical energy according to an embodiment of the present invention,
- Fig. 3: is a schematic side view of a ski with an Alpine touring binding employing a system for harvesting electrical energy according to an alternative embodiment of the present invention,
- Fig. 4: is a schematic side view of a ski with an Alpine touring binding employing a system for harvesting electrical energy according to an alternative embodiment of the present invention,
- Fig. 5: is a schematic side view of a ski with an Alpine touring binding employing a system for harvesting electrical energy according to an alternative embodiment of the present invention,
- Fig. 6: is a schematic drawing of a backpack employing a system for harvesting electrical energy which is not an embodiment of the present invention, and
- Fig. 7: is a schematic sectional view of a ski pole employing a system for harvesting electrical energy which is not an embodiment of the present invention.

### DESCRIPTION OF THE PREFERRED EMBODIMENTS

For the purposes of promoting an understanding of the principles of the invention, reference will now be made to the preferred embodiments illustrated in the drawings and specific language will be used to describe the same. It will nevertheless be understood that no limitation of the scope of the invention is thereby intended, such alterations and further modifications in the illustrated device and such further applications of the principles of the invention as illustrated therein being contemplated therein as would normally occur now or in the future to one skilled in the art to which the invention relates.

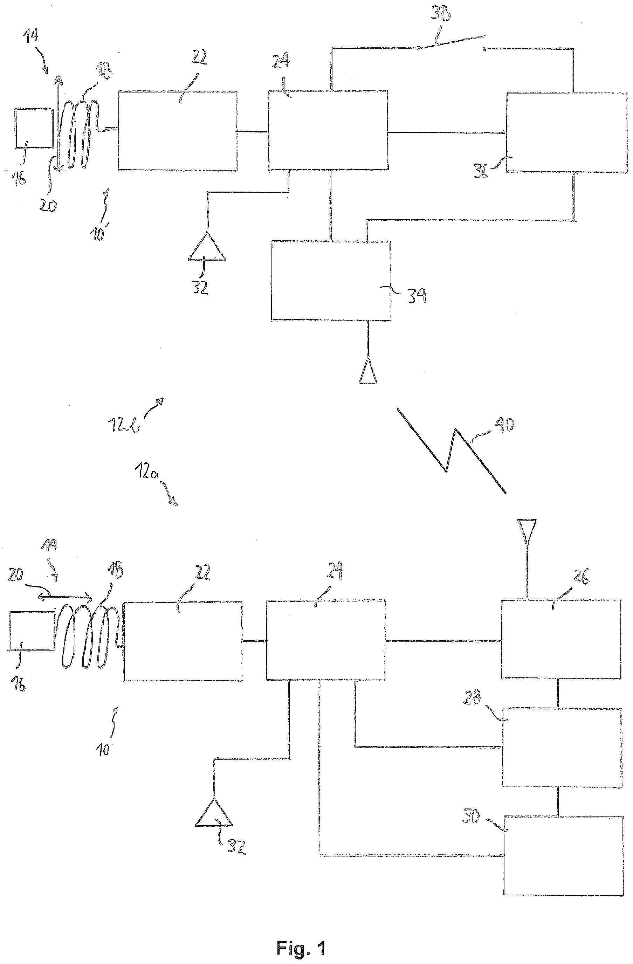

Fig. 1 shows an emergency release system 12 for ski touring purposes comprising two systems 10, 10' for harvesting electrical energy according to two different embodiments of the present invention. The lower part of Fig. 1 shows a first part 12a of the emergency release system 12 that is associated with an Alpine touring binding (not shown). The energy harvesting system 10 as comprised in the first part 12a includes an electrical generator arrangement 14 comprising a magnet 16 and a coil 18. The magnet 16 and the coil 18 can be moved relative to each other, as schematically indicated by arrow 20, to thereby induce a current in the coil 18. In the electrical energy harvesting system 10, the electrical generator arrangement 14 converts mechanical energy that is associated with a pivotal movement of a ski boot relative to a ski using Nordic ski techniques to electrical energy, as will be explained in more detail below.

The coil 18 is connected with a rectifier 22 which generates a charging current for charging a storage device for electrical energy, which in the embodiment shown in Fig. 1 is a rechargeable battery 24. However, other storage devices could likewise be used, such as a suitable capacitor, for example a super capacitor.

The battery 24 is connected with three consumers of electrical energy, namely with an RF receiver 26, with a control unit 28 and with an ignition apparatus 30 for igniting a pyrotechnic device (not shown). Further, the battery 24 is connected with a USB-port 32. Via the USB-port 32, various electrical devices needed during extended ski tours can be charged, such as mobile phones, GPS-devices, flashlights, or the like. The USB-port 32 is only exemplary, and other electrical connectors or other types of interface for establishing an electrical connection with a further consumer may be possible.

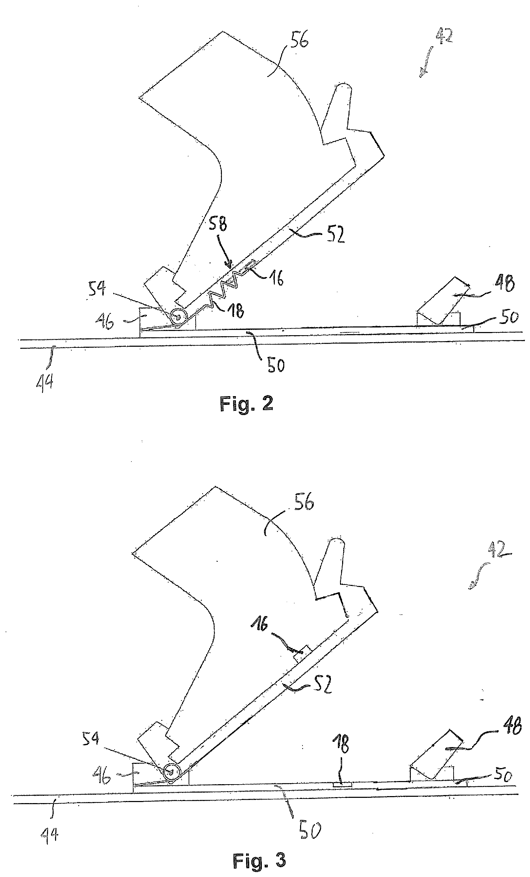

The upper part of Fig. 1 shows the second part 12b of the emergency release system 12, which likewise comprises a system 10' for harvesting electrical energy, including a generator 14, a rectifier 22, a battery 24 and a USB-port 32. The battery 24 is used for powering a transmitter 34 and a controller 36. The second part 12b of the emergency release system 12 is generally associated with a backpack (not shown in Fig. 1), in particular with a backpack comprising an avalanche airbag system. In the schematic representation of Fig. 1, the components of the electrical energy harvesting system 10' appear similar to those of the system 10, but in specific embodiments, particularly the generator 14 will look different, as will become apparent with reference to Figs. 2 to 7 below.

Next, the function of the emergency release system 12 shall be described. In case of an avalanche, a skier will pull an emergency line (not shown) of an avalanche airbag system to inflate the avalanche airbags, while still trying to ski away from the avalanche. Once the skier notes that he cannot escape from the avalanche, he will try to release the skis from his feet, as this will decrease the risk of injuries and increase the chances of staying afloat.

Traditionally, the skier will try to open his bindings manually, but experience shows that this is difficult to achieve in practice. With the emergency release system shown in Fig. 1, the skier initiates an automatic release of the skis by operating a second handle or by pulling the same handle (not shown) as used for the avalanche airbag again. In the schematic representation of Fig. 1, this is represented by a switch 38 that is closed and thereby provides a corresponding signal to the controller 36. Upon this signal, the controller instructs the transmitter 34 to transmit an RF-signal 40 which is received by the RF receiver 26 of the first part 12a of the emergency release system 12. A received signal is analyzed by the control unit 28, which in turn controls the ignition apparatus 30 for igniting a pyrotechnic device for releasing the ski from the feet, either by releasing the ski boot from the binding (not shown) or by releasing the entire binding from the ski (not shown).

As is apparent from the description of Fig. 1, the entire security of the system relies on a secure power supply. In the invention, the batteries 24 are charged by using mechanical energy that is associated with the movement of the skier when applying the Nordic skiing technique. In particular, when walking on his skis while alternatingly lifting the heels of the ski boots off the ski the battery 24 of the first part 12a of the system 12 can be charged. Further, when using the ski poles for walking in the Nordic skiing technique, the battery 24 of the second part 12b of the emergency release system 12 will be charged in a manner described below in more detail. Accordingly, failure due to weak batteries, or batteries that have lost their power due to extreme cold can be reliably prevented, thereby adding to the security of the system.

Further, using the USB-port 32, other electrical devices can be powered, too, which is of particular importance in case an emergency call needs to be made. For example, in case of an emergency, it may happen that the battery of a mobile phone has become low, for example during extended ski tours, when the user has inadvertently not fully charged the mobile phone prior to the tour, if the user forgot to switch off the telephone, or if the telephone was inadvertently switched on in the backpack. In these cases, the electrical generator 14 provides a reliable source of energy that can be life-saving. The same is true for powering a GPS-device on which the skier has to rely e.g. if the sight is impaired by fog or if the skier needs to find his or her way in the dark.

Fig. 2 to 5 show various ways how the generator 14 for the first part 12a of the emergency release system can be formed. Fig. 2 shows an Alpine touring binding 42, also referred to as "ski touring binding", which is attached to a ski 44. The Alpine touring binding 42 has a fixed front part 46 and a fixed back part 48 that are fixedly attached to a baseplate 50 which is in turn fixed to the ski 44. On the fixed front part 46, a frame 52 is pivotably mounted, such that the frame 52 can be pivoted or rotated around a horizontal axis 54 when the heel of a ski boot 56 is lifted off the ski 44. In Fig. 2, the axis 54 is vertical to the paper plane.

Lifting the heel of the ski boot 56 off the ski 44 and stepping down again is characteristic of the "Nordic skiing technique" as opposed to Alpine downhill skiing where the heel of the ski boot 56 would be permanently fixed to the ski 44.

According to the present invention, the generator arrangement 14 associated with the Alpine touring binding 42 generally seeks to convert the mechanical energy that is associated with the pivotal movement of the ski boot 56 relative to the ski 44 to electric energy. Various alternative ways to achieve this are shown in Figs. 2 to 5.

In Fig. 2 a linear generator 58 is shown, which comprises a coil 18 that is movably provided within the frame 52, and a magnet 16, that is fixedly provided within the frame 52.. Since one end of the coil 18 is off-centered from the axis 54, the coil 18 will move relative to the frame 52 and hence relative to the magnet 16 when the frame 52 pivots around the axis 54. Accordingly, a current is induced in the coil 18, which can be rectified with a rectifier as schematically shown under reference sign 22 in Fig. 1 (not shown in Fig. 2) and used for charging the battery 24 (not shown in Fig. 2). The linear generator 58 is a very robust and efficient embodiment of an electrical generator arrangement 14 for the purpose of the present invention.

Note that according to Lenz's Law, an induced electromotive force always gives rise to a current whose magnetic field opposes the original change in magnetic flux, and this is associated with a mechanical force, which is due to the Lorentz force. With respect to the linear generator 58 shown in Fig. 2, this implies that the Lorentz force generated when the frame 52 is lifted off the ski 44 will generate a mechanical force in opposite direction, i.e. a torque that counteracts the lifting off of the frame 52 from the ski 44. This is a direct consequence of the Law of Conservation of Energy, since the electrical energy generated by the generator stems from mechanical work performed when lifting the frame 52 against the restoring force.

Note that in Alpine touring bindings, such a restoring force of the frame 52 is often wanted, because it allows better control over the ski when the foot is in the air, as is necessary when changing direction in switchbacks in steep passages. For this purpose, conventional Alpine touring bindings 42 may have a mechanical spring that would be arranged in the frame 52 in a similar manner as the linear generator 58 in Fig. 2. Note, however, that the character of the restoring force of an ordinary spring and of the linear generator 58 is different. While the restoring force of a spring is proportional to its elongation, the restoring force of the linear generator 58 is proportional to the relative velocity of the coil 18 and the magnet 16, which means that the restoring force is high for rapid movements and low for slow movements. However, precisely this turns out to be favorable for control of the ski when the foot is in the air.

When the ski boot is moved downwards, and a simple half-wave rectifier is used, any charging current would be blocked, in which case no electrical power is generated, and hence no restoring force applies. If the rectifier 22 is formed by a full-wave rectifier, a charging current of same polarity as in the upwards movement is also generated when the ski boot is moved downwards.

The electrical energy generated by the linear generator 58 of Fig. 2 can be used for powering the first part 12a of an emergency release system as schematically shown in Fig. 1, which may comprise a battery 24, an RF receiver 26, a control unit 28, an ignition apparatus 30 for a pyrotechnical device and a USB-port 32, which are not shown in Fig. 2 for clarity. In the embodiment shown in Fig. 2, the emergency release allows for separating the baseplate 50 from the ski 44 by means of a pyrotechnic device (not shown). Accordingly, it is advantageous that the battery (not shown) is fixed to the ski 44 or baseplate 50, rather than to the frame 52 or to the ski boot 56, and for this purpose, the magnet 16 is arranged stationary within the frame 52 and the coil 18 is arranged to have an end that is stationary with the ski 44 or with the baseplate 50 but that is movable with respect to the frame 52 as the frame 52 is pivoted with respect to the ski 44 or the baseplate 50.

However, in alternative embodiments where the release mechanism would serve to release the ski boot 56 from the binding, it could be preferable to have the coil 18 fixed to the frame 52 and to have the magnet 16 movable with respect to the frame 52. More generally, in preferred embodiments the coil 18 of the electrical generator 58 will typically be fixed with the entity where the electric energy is actually needed.

While in Fig. 2 a linear generator 58 is shown, a rotary generator (not shown) may alternatively be employed, which may be associated with a swivel joint connecting the fixed front part 46 and the frame 52 rotatably around the axis 54. Such rotary generators are known in the art and are hence not described in detail here.

Fig. 3 shows a further embodiment of a system 10 for harvesting electrical energy in which the electrical generator comprises a coil 18 that is provided in the baseplate 50 and a magnet 16 which is provided in the sole of the ski boot 56. By moving the magnet 16 towards and away from the coil 18, a current is induced in the coil 18 which can be used for charging a battery (not shown in Fig. 3). In some embodiments, it may be possible that the user himself mounts the magnet 16 at the sole of the ski boot 56. Note that the type of electrical generator shown in Fig. 3 can also be used with Alpine touring bindings that do not use any frame 52 at all, but where only the tip of the ski boot 56 is mounted with inserted pins. These bindings are also referred to as "pin-insert bindings" in the art and are e.g. available under the brand name DYNAFIT.

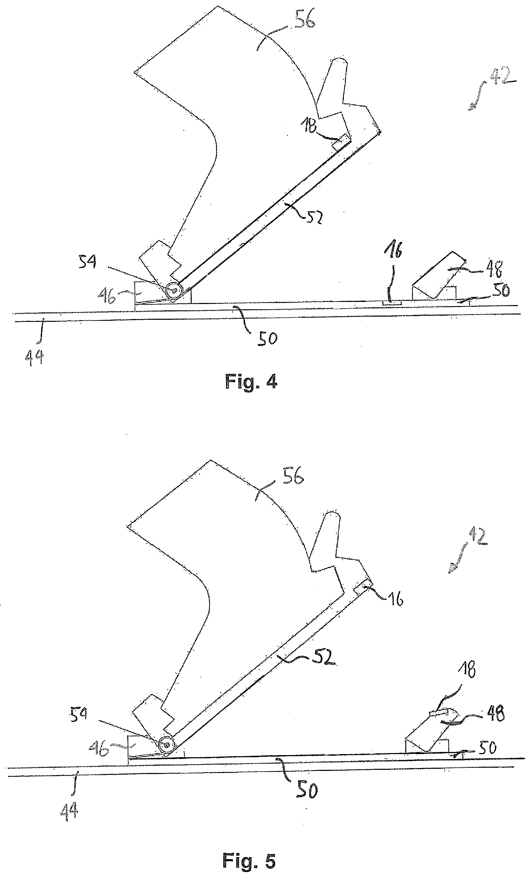

Fig. 4 shows another embodiment, in which the electrical generator is formed by a coil 18 provided in the sole of the ski boot 56 and a magnet 16 provided in the baseplate 50.

Finally, Fig. 5 shows a yet further embodiment in which a coil 18 is provided on the fixed back part 48 of the binding 42, while the magnet 16 is provided in the end of the frame 52. The variants of Figs. 3 to 5 work very similarly. The choice among these variants will depend on where the battery should be located, i.e. where the electrical energy is actually needed, whether the binding comprises a frame 52 or not, and the like.

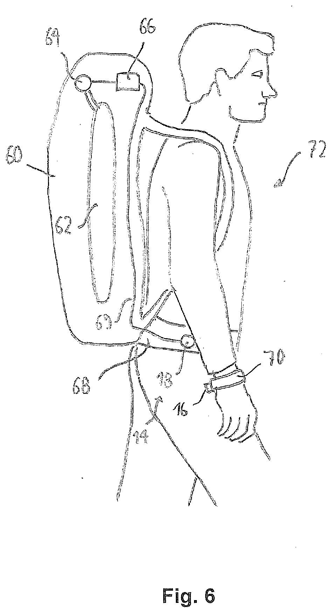

Fig. 6 shows an example of an application of the second part 12b of the emergency release system 12 that was described with reference to the upper part of Fig. 1 above. In Fig. 6, a backpack 60 is shown which comprises emergency airbags 62 on both sides. Such emergency airbags 62 are for example formed by polyamide balloons that can be inflated in case of emergency using a pressurized nitrogen cartridge 64. The rectifier 22, battery 24, USB-port 32, transmitter 34, controller 36 and switch 38 schematically shown in Fig. 1 are not shown in detail in Fig. 6, but are collectively contained in a housing indicated as reference sign 66. As regards the generator 14, the coil 18 is provided in a hip belt 68 of the backpack 60 and is connected to the housing 66 via a cable 69. The magnet 16 is provided in a wristband 70 worn by a user 72. During the natural movement in the Nordic skiing technique, using ski poles to assist in walking, the wristband 70 containing the magnet 16 will be repeatedly moved close to the coil 18 and away from the coil 18 again, thereby inducing a current in the coil 18 that can be used for charging the battery 24 of the second part 12b of the release system 12 (not shown in Fig. 6).

While in the embodiments of Figs. 2 to 5 the relative movement between the magnet 16 and the coil 18 is mainly axial with regard to the coil axis, in the example of Fig. 6 the relative movement is generally perpendicular to the coil axis. This difference is indicated in the schematic representation in Fig. 1 by the respective arrows 20 in the first and second parts 12a, 12b of the emergency release system 12. Nevertheless, both relative movements lead to a change in the magnetic flux through the coil 18 and hence allow for inducing an electric current.

Instead of providing the magnet 16 in a wristband 70, the magnet 16 may also be provided in the handle of a ski pole. While the user 72 may forget to wear the wristband and thereby fail to charge the battery 24 of the second part 12b of the emergency release system 12, the user 72 will always use his ski pole during touring skiing. Accordingly, this variant adds to the security of the system.

In very sophisticated systems, it may be also desirable to provide for an emergency release of the handles of the ski pole from the ski pole shaft, for similar reasons that one would wish to release the skis from the feet when caught in an avalanche. For this purpose, it may likewise be desirable to provide a system similar to the first part 12a of the emergency release system of Fig. 1 also in the handle of a ski pole. In this case, the generator 14 could be similar to that in Fig. 6, except that the coil 18 would be provided in the handle of the ski pole, while the magnet 16 could for example be provided in the hip belt 68 of the backpack.

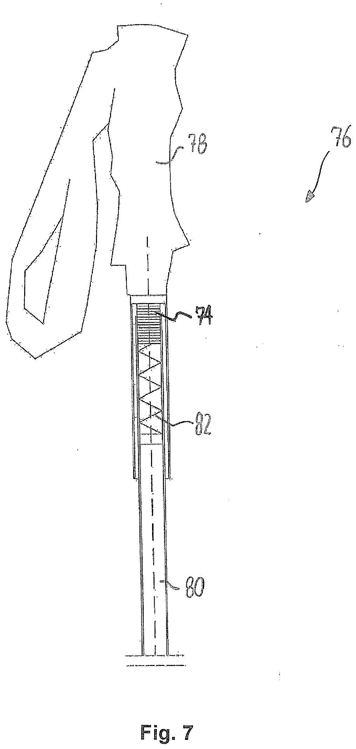

An alternative electrical generator 14 for specific use in a ski pole 76 is shown in Fig. 7, where a stack of piezoelectric elements 74 is provided. In the ski pole 76, a handle 78 is axially moveable with regard to a ski pole shaft 80. The shaft 80 and the handle 78 are connected via a spring 82. Upon use of the ski pole 76, the stack of piezoelectric elements 74 will experience varying pressure which generates an electrical voltage across the stack of piezoelectric elements 74 that can be used to charge a battery 24 (not shown in Fig. 7). The rest of the emergency release system provided in the ski pole 76 may be similar to the first part 12a of the emergency release system 12 shown in Fig. 1 and therefore need not be described again.

The embodiments described above and the accompanying figures merely serve to illustrate the system according to the present invention, and should not be taken to indicate any limitation of the system. The scope of the patent is solely determined by the following claims.

### LIST OF REFERENCE SIGNS

- 10, 10': system for harvesting electrical energy during ski touring
- 12: emergency release system
- 12a: first part of emergency release system 12 associated with a ski or a ski pole
- 12b: second part of emergency release system 12 associated with a backpack
- 14: electrical generator arrangement
- 16: magnet
- 18: coil
- 20: arrow indicating relative movement between magnet 16 and coil 18
- 22: rectifier
- 24: battery
- 26: RF-receiver
- 28: control unit
- 30: ignition apparatus for pyrotechnic device
- 32: USB-port
- 34: RF-transmitter
- 36: control unit
- 38: switch
- 40: RF-connection
- 42: Alpine touring binding
- 44: ski
- 46: fixed front part of binding 42
- 48: fixed back part of binding 42
- 50: baseplate of binding 42
- 52: frame of binding 42
- 54: rotational axis
- 56: ski boot
- 58: linear generator
- 60: backback
- 62: airbag
- 64: nitrogen cartridge
- 66: housing including components of second part 12b of emergency release system 12
- 68: hip belt of backpack 60
- 69: cable
- 70: wrist band carrying magnet 16
- 72: ski tourist
- 74: piezo-electric element
- 76: ski pole
- 78: handle of ski pole 76
- 80: shaft of ski pole 76
- 82: spring connecting handle 78 and shaft 80

## Claims

1. A system (10, 10') for harvesting electrical energy during ski touring, comprising:
- an electrical generator arrangement (14) for converting mechanical energy to electrical energy,
- a storage device (24) for electrical energy, and
- a consumer (26, 28, 30, 34, 36) of electrical energy or an interface (32) for establishing an electrical connection to such consumer, **characterised in that** said electrical generator arrangement for converting mechanical energy is associated with the pivoting movement of a ski boot (56) relative to a ski (44) when using Nordic skiing techniques.

2. The system (10, 10') of claim 1, wherein the electrical generator arrangement (14) comprises a linear generator (58) that is actuated when a ski boot (56) is moved relative to a ski (44).

3. The system (10, 10') of claim 2, wherein the system is associated with an Alpine touring binding (42) having a frame (52) on which a ski boot (56) is to be fixed and that is pivotably connectable to a fixed front part (46) to be attached to a ski (44), and wherein said linear generator (58) is actuated when said frame (56) is pivoted with respect to said fixed front part (46).

4. The system (10, 10') of claim 3, wherein said linear generator (58) is arranged within or mounted to said frame (52).

5. The system (10, 10') of one of the preceding claims, wherein said system (10, 10') is associated with an Alpine touring binding (42) comprising a swivel joint connecting
- a part (52) of the binding for fixing a ski boot (56) or a portion of the ski boot (56), and
- a part (46) of the binding (42) that is to be fixed to a ski (44) in a rotatable manner,
and wherein said electrical generator (14) is a rotary generator having moving parts associated with the moving parts of said swivel joint.

6. The system (10, 10') of one of the preceding claims, wherein said generator (14) is associated with a rectifier (22), wherein the rectifier is preferably one of a half-wave rectifier or a full-wave rectifier, in particular a bridge rectifier.

7. The system (10, 10') of claim 6, wherein said rectifier (22) is arranged such that said storage device (24) for electrical energy is only charged when the heel of a ski boot (56) is raised from the ski (44).

8. The system (10, 10') of one of the preceding claims, wherein said electrical consumer is a receiver (26) or a transmitter (34) of an emergency release system (12), in which upon receipt of an emergency signal (40) by said receiver (26)
- a ski boot (56) is released from a binding (42), or
- a binding (42) is released from a ski (44), or
- a handle (78) is removed from a shaft 80 of a ski pole (76).

9. The system (10, 10') of one of the preceding claims, wherein the electrical consumer is an ignition apparatus (30) for igniting a pyrotechnic device for releasing a ski boot (56) from a binding (42), a binding (42) from a ski (44) or a handle (78) from a ski pole shaft (80).

10. The system (10, 10') of one of the preceding claims, wherein said interface for establishing a connection with a consumer is an electrical connector, in particular a USB-port (32).

11. The system (10, 10') of one of the preceding claims, wherein said storage device (24) is a rechargeable battery or an electrochemical capacitor, in particular a super capacitor.

12. The system (10, 10') of one of the preceding claims, wherein said electrical consumer is a heating device for warming a rechargeable battery.

13. The system (10, 10') of one of the preceding claims, wherein the electric generator arrangement (14) comprises a coil (18) and a magnet (16), wherein
- one of said coil (18) and magnet (16) is arranged or to be disposed at a ski (44) or a part (50) of a binding (42) that is to be fixedly attached to a ski (44), and
- the other of said coil (18) and magnet (16) is arranged or to be disposed at a ski boot (56) or a portion (52) of a binding (42) that is movable with respect to a ski (44).

14. An emergency release system (12) comprising
- a receiver (26) for receiving an emergency radio signal (40),
- a control unit (28) for controlling an apparatus (30) for igniting a pyrotechnic device upon receipt of such emergency radio signal (40), and
- a system (10) for harvesting electrical energy according to one of claims 1 to 13, wherein the receiver (26), the control unit (28) and the apparatus (30) for igniting said pyrotechnic device are powered with electrical power stored in the storage device (24) for electrical energy.

## Patentansprüche

1. System (10, 10') zum Gewinnen von elektrischer Energie während des Skitourengehens, das Folgendes umfasst:
- eine elektrische Generatoranordnung (14) zum Umwandeln von mechanischer Energie in elektrische Energie,
- eine Speichereinrichtung (24) für elektrische Energie, und
- einen Verbraucher (26, 28, 30, 34, 36) für elektrische Energie oder eine Schnittstelle (32) zur Herstellung einer elektrischen Verbindung mit einem solchen Verbraucher, **dadurch gekennzeichnet, dass** die elektrische Generatoranordnung zur Umwandlung mechanischer Energie mit der Schwenkbewegung eines Skischuhs (56) relativ zu einem Ski (44) während des Steigens oder Langlaufens (Nordic skiing techniques) assoziiert ist.

2. System (10, 10') nach Anspruch 1, bei dem die elektrische Generatoranordnung (145) einen linearen Generator (58) umfasst, der betätigt wird, wenn ein Skischuh (56) relativ zu einem Ski (44) bewegt wird.

3. System (10, 10') nach Anspruch 2, wobei das System mit einer alpinen Tourenbindung (42) assoziiert ist, die einen Rahmen (52) umfasst, auf dem ein Skischuh (56) zu befestigen ist und die schwenkbar mit einem feststehenden Vorderteil (46) verbindbar ist, der an einem Ski (44) zu befestigen ist, und wobei der lineare Generator (58) betätigt wird, wenn der Rahmen (56) in Bezug auf den feststehenden vorderen Teil (46) geschwenkt wird.

4. System (10, 10') nach Anspruch 3, wobei der lineare Generator (58) innerhalb des Rahmens (52) angeordnet ist, oder an diesen befestigt ist.

5. System (10, 10') nach einem der vorhergehenden Ansprüche, wobei das System (10, 10') mit einer alpinen Tourenbindung (42) assoziiert ist, die ein Drehgelenk umfasst, das
- einen Teil (52) der Bindung zum Fixieren eines Skischuhs (56) oder einen Abschnitt des Skischuhs (56), und
- einen Teil (46) der Bindung (42), die an dem Ski (44) zu befestigen ist, in drehbarer Weise miteinander verbindet,
und wobei der elektrische Generator (14) ein Drehgenerator ist, der bewegliche Teile umfasst, die mit den beweglichen Teilen des Drehgelenkes assoziiert ist.

6. System (10, 10') nach einem der vorhergehenden Ansprüche, bei dem der Generator (14) mit einem Gleichrichter (22) assoziiert ist, wobei der Gleichrichter vorzugsweise ein Halbwellengleichrichter oder ein Vollwellengleichrichter ist, und insbesondere ein Brückengleichrichter.

7. System (10, 10') nach Anspruch 6, wobei der Gleichrichter (22) so angeordnet ist, dass die Speichereinrichtung (24) für elektrische Energie nur geladen wird, wenn die Ferse eines Skischuhs (56) von dem Ski (44) abgehoben wird.

8. System (10, 10') nach einem der vorhergehenden Ansprüche, wobei der elektrische Verbraucher ein Empfänger (26) oder ein Sender (34) eines Notfall-Auslösesystems (12) ist, wobei in Folge des Empfangs eines Notfallsignals (40) durch den Empfänger (26)
- ein Skischuh (56) aus der Bindung (42) ausgelöst wird, oder
- eine Bindung (42) von einem Ski (44) gelöst wird, oder
- ein Handgriff (78) von dem Schaft (80) eines Shistocks (76) entfernt wird.

9. System (10, 10') nach einem der vorhergehenden Ansprüche, wobei der elektrische Verbraucher eine Zündvorrichtung (30) zum Zünden einer pyrotechnischen Einrichtung zum Lösen eines Skischuhs (56) von einer Bindung (42), einer Bindung (42) von einem Ski (44), oder eines Handgriffs (78) von dem Schaft (80) eines Skistocks ist.

10. System (10, 10') nach einem der vorhergehenden Ansprüche, wobei die Schnittstelle zum Herstellen einer Verbindung mit einem Verbraucher ein elektrischer Verbinder, insbesondere ein USB-Port (32) ist.

11. System (10, 10') nach einem der vorhergehenden Ansprüche, wobei die Speichervorrichtung (24) eine wiederaufladbare Batterie oder ein elektrochemischer Kondensator ist, insbesondere ein Superkondensator.

12. System (10, 10') nach einem der vorhergehenden Ansprüche, wobei der elektrische Verbraucher eine Heizvorrichtung zum Wärmen einer wiederaufladbaren Batterie ist.

13. System (10, 10') nach einem der vorhergehenden Ansprüche, wobei die elektrische Generatoranordnung (14) eine Spule (18) und einen Magnet (16) umfasst, wobei
- die Spule (18) oder der Magnet (16) so an einem Ski (44) oder einem Teil (50) einer Bindung (42) arrangiert oder anzuordnen ist, dass sie bzw. er an dem Ski (44) festgelegt ist, und
- die jeweils andere Komponente aus der Spule (18) und dem Magnet (16) an einem Skischuh (56) oder einem Abschnitt (52) einer Bindung (42) arrangiert oder anzuordnen ist, der in Bezug auf den Ski (44) beweglich ist.

14. Notfallauslösesystem (12), das Folgendes umfasst:
- einen Empfänger (26) zum Empfangen eines Notfall-Radiosignals (40),
- eine Steuereinheit (28) zum Steuern einer Vorrichtung (30) zum Zünden einer pyrotechnischen Einrichtung auf den Empfang eines solchen Notfall-Radiosignals (40) hin, und
- ein System (10) zum Gewinnen elektrischer Energie nach einem der Ansprüche 1 bis 13, wobei der Empfänger (26), die Steuereinheit (28) und die Vorrichtung (30) zum Zünden der pyrotechnischen Einrichtung mit elektrischer Leistung gespeist werden, die in der Speichereinrichtung (24) für elektrische Energie gespeichert ist.

## Revendications

1. Système (10, 10') destiné à collecter de l'énergie électrique au cours d'une randonnée à skis, comprenant :
- un agencement de générateur électrique (14) destiné à convertir de l'énergie mécanique en énergie électrique ;
- un dispositif de stockage (24) d'énergie électrique ; et
- un matériel grand public (26, 28, 30, 34, 36) de consommation d'énergie électrique, ou une interface (32) pour établir une connexion électrique à un tel matériel grand public, **caractérisé en ce que** ledit agencement de générateur électrique destiné à convertir l'énergie mécanique est associé au mouvement de pivotement d'une chaussure de ski (56) par rapport à un ski (44) lorsque sont utilisées des techniques de ski nordique.

2. Système (10, 10') selon la revendication 1, dans lequel l'agencement de générateur électrique (14) comprend un générateur linéaire (58) qui est actionné lorsqu'une chaussure de ski (56) est déplacée par rapport à un ski (44).

3. Système (10, 10') selon la revendication 2, dans lequel le système est associé à une fixation de ski de randonnée alpine (42) présentant un cadre (52), sur lequel une chaussure de ski (56) doit être fixée, et qui peut être raccordé par pivotement à une pièce frontale fixe (46) pour être fixé à un ski (44), et dans lequel ledit générateur linéaire (58) est actionné lorsque ledit cadre (56) est pivoté par rapport à ladite pièce frontale fixe (46).

4. Système (10, 10') selon la revendication 3, dans lequel ledit générateur linéaire (58) est agencé dans ou monté sur ledit cadre (52).

5. Système (10, 10') selon l'une quelconque des revendications précédentes, dans lequel ledit système (10, 10') est associé à une fixation de ski de randonnée alpine (42) comprenant un raccord tournant reliant :
- une pièce (52) de la fixation pour fixer une chaussure de ski (56) ou une partie de la chaussure de ski (56) ; et
- une pièce (46) de la fixation (42) qui doit être fixée à un ski (44) de manière rotative ; et
dans lequel ledit générateur électrique (14) est un générateur rotatif doté de pièces en mouvement associées aux pièces en mouvement dudit raccord tournant.

6. Système (10, 10') selon l'une quelconque des revendications précédentes, dans lequel ledit générateur (14) est associé à un redresseur (22), dans lequel le redresseur est de préférence un redresseur demi-onde ou un redresseur pleine-onde, en particulier un redresseur en pont.

7. Système (10, 10') selon la revendication 6, dans lequel ledit redresseur (22) est agencé de sorte que ledit dispositif de stockage (24) d'énergie électrique n'est chargé que lorsque le talon d'une chaussure de ski (56) est surélevé par rapport au ski (44).

8. Système (10, 10') selon l'une quelconque des revendications précédentes, dans lequel ledit matériel électrique grand public est un récepteur (26) ou un émetteur (34) d'un système de libération d'urgence (12) dans lequel, suite à la réception d'un signal d'urgence (40) par ledit receveur (26) :
- une chaussure de ski (56) est libérée d'une fixation (42) ;
- une fixation (42) est libérée d'un ski (44) ; ou
- un poignée (78) est extraite d'un arbre (80) d'un bâton de ski (76).

9. Système (10, 10') selon l'une quelconque des revendications précédentes, dans lequel le matériel électrique grand public est un appareil d'allumage (30) pour allumer un dispositif pyrotechnique en vue de libérer une chaussure de ski (56) d'une fixation (42), une fixation (42) d'un ski (44), ou une poignée (78) d'un arbre de bâton de ski (80).

10. Système (10, 10') selon l'une quelconque des revendications précédentes, dans lequel ladite interface destinée à établir une connexion avec un matériel grand public est un connecteur électrique, en particulier un port USB (32).

11. Système (10, 10') selon l'une quelconque des revendications précédentes, dans lequel ledit dispositif de stockage (24) est une batterie rechargeable ou un condensateur électrochimique, en particulier un super-condensateur.

12. Système (10, 10') selon l'une quelconque des revendications précédentes, dans lequel ledit matériel électrique grand public est un dispositif de chauffage destiné à réchauffer une batterie rechargeable.

13. Système (10, 10') selon l'une quelconque des revendications précédentes, dans lequel l'agencement de générateur électrique (14) comprend une bobine (18) et un aimant (16), dans lequel
- l'un des éléments parmi ladite bobine (18) et ledit aimant (16) est agencé ou doit être disposé au niveau d'un ski (44) ou d'une pièce (50) d'une fixation (42) qui doit être fixé de manière non amovible à un ski (44) ; et
- l'autre des éléments parmi ladite bobine (18) et ledit aimant (16) est agencé ou doit être disposé au niveau d'une chaussure de ski (56) ou d'une partie (52) d'une fixation (42) qui est mobile par rapport à un ski (44).

14. Système de libération d'urgence (12) comportant :
- un récepteur (26) destiné à recevoir un signal radio d'urgence (40) ;
- une unité de commande (28) destinée à commander à un appareil (30) d'allumer un dispositif pyrotechnique suite à la réception d'un tel signal radio d'urgence (40) ; et
- un système (10) destiné à collecter de l'énergie électrique selon l'une quelconque des revendications 1 à 13, dans lequel le récepteur (26), l'unité de commande (28), et l'appareil (30) d'allumage dudit dispositif pyrotechnique, sont alimentés par de l'énergie électrique stockée dans le dispositif de stockage (24) d'énergie électrique.
